# EUROPEAN PATENT SPECIFICATION

(11) **EP 4 666 936 B1**
(45) Date of publication and mention of the grant of the patent: **02.09.2026**
(21) Application number: 25183296.0
(22) Date of filing: 17.06.2025
(51) Int. Cl.: A61B 5/00, G01N 11/00

(54) **SYSTEMS AND METHODS FOR REAL-TIME MEASUREMENT OF FLUID VISCOSITY IN FLOWING CONDITIONS USING PHOTOACOUSTIC SENSING**
SYSTEME UND VERFAHREN ZUR ECHTZEITMESSUNG DER FLÜSSIGKEITSVISKOSITÄT UNTER STRÖMUNGSBEDINGUNGEN MITTELS PHOTOAKUSTISCHER MESSUNG
SYSTÈMES ET PROCÉDÉS DE MESURE EN TEMPS RÉEL DE LA VISCOSITÉ D'UN FLUIDE DANS DES CONDITIONS D'ÉCOULEMENT À L'AIDE D'UNE DÉTECTION PHOTOACOUSTIQUE

(30) Priority: 18.06.2024 IN 202421046861
(43) Date of publication of application: 24.12.2025
(73) Proprietor: Tata Consultancy Services Limited, Maharashtra (IN)
(72) Inventor: GOREY, ABHIJEET, 700160 Kolkata (IN); DAS, RAJAT KUMAR, 700160 Kolkata (IN); BHAUMIK, CHIRABRATA, 700091 Kolkata (IN); CHAKRAVARTY, TAPAS, 700091 Kolkata (IN)
(74) Representative: Goddar, Heinz J.

(56) References cited:
- GOREY ABHIJEET ET AL: "A Compact Photoacoustic Sensing System for Expeditive Estimation of Paint's Viscosity", 2023 16TH INTERNATIONAL CONFERENCE ON SENSING TECHNOLOGY (ICST), IEEE, 17 December 2023 (2023-12-17), pages 1 - 5, XP034568540, DOI: 10.1109/ICST59744.2023.10460824
- XIONG CHENGXIN ET AL: "Quantitative blood glucose detection influenced by various factors based on the fusion of photoacoustic temporal spectroscopy with deep convolutional neural networks", BIOMEDICAL OPTICS EXPRESS, vol. 15, no. 5, 2 April 2024 (2024-04-02), United States, pages 2719, XP093322696, ISSN: 2156-7085, DOI: 10.1364/BOE.521059

## Description

### CROSS-REFERENCE TO RELATED APPLICATIONS AND PRIORITY

The present application claims priority from Indian provisional application no. 202421046861, filed on June 18, 2024.

### TECHNICAL FIELD

The disclosure herein generally relates to the field of viscosity of fluids, and, more particularly, to systems and methods for real-time measurement of fluid viscosity in flowing conditions using photoacoustic sensing.

### BACKGROUND

Viscosity is one of the critical thermophysical properties of any fluid (liquids). It indicates the flow resistance due to the internal friction between the subsequent layers of the fluid. Viscosity serves as an important parameter in determining the overall quality of different fluids including food and beverages, pharmaceuticals, petrochemicals, paints and coating, blood, and/or the like. Particularly in the paint and coating industries, apart from aesthetic finishing, viscosity determines paint transfer efficiency, coating deposition, durability, and environmental sustainability. Thus, a shift in viscosity beyond a tolerance would explicitly impact cost of the paint product. Therefore, to avoid monetary loss and retain the brand value, the paint manufacturer monitors the viscosity of the paint throughout the manufacturing process.

Inline measurement of paint viscosity in the flowing conditions is extremely important for the paint manufacturing industry. Conventionally, for in-line viscosity measurement rheometers are used. To measure viscosity with rheometers, surface of sensor needs to be in contact with the paint. Although it provides accurate measurements, after every batch of paint, the surface of the rheometer needs to be cleaned which may affect sensor's surface and thereby its shelf life. Also, high cost involved limits its usage for small-scale paint manufacturers. Alternatively, laboratory based viscosity measurements (e.g., viscometers or cup based) are practiced by the industries. Despite the accuracy of these methods, the paint sampling, time consumption and human borne measurement errors makes this method less likely.

Several methods have reported different sensing mechanisms for viscosity measurement such as vibration spectroscopy, micro-electro-mechanical-systems (MEMS), Raman spectroscopy, falling ball viscosity sensors, and/or the like. Although these sensors can measure viscosity, they possess several limitations to be used in manufacturing plants. Moreover, in paints, the viscosity changes with shear rate and other physical conditions and hence, it is essential to measure viscosity during the paint mixing or flowing conditions.

Gorey Abhijeet et al. report in "A Compact Photoacoustic Sensing System for Expeditive Estimation of Paint's Viscosity (2023 16th International Conference on Sensing Technology (ICST), IEEE, 17 December 2023 (2023-12-17), pages 1-5, DOI: 10.1109/ ICST59744.2023.10460824) of a method using photoacoustic sensing measuring an attenuation of a signal.

Xiong Chengxin et al. report in "Quantitative blood glucose detection influenced by various factors based on the fusion of photoacoustic temporal spectroscopy with deep convolutional neural networks" (Biomedical Optics Express, vol. 15, no. 5, 2 April 2024 (2024-04-02), page 2719, ISSN: 2156-7085, DOI: 10.1364/BOE.521059) of a combination of photoacoustic date and a fusion deep neural network.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: generating, via one or more hardware processors, a plurality of frequency domain photoacoustic (FDPA) signals based on excitation of a fluid sample using an intensity modulated continuous wave laser diode setup; extracting, via the one or more hardware processors, a set of viscosity features from the plurality of frequency domain photoacoustic (FDPA) signals, wherein the set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals; obtaining, via the one or more hardware processors, a plurality of viscosity measurements for the fluid sample using the set of viscosity features; splitting, via the one or more hardware processors, the plurality of viscosity measurements into a first set of viscosity measurements and a second set of viscosity measurements; training, via the one or more hardware processors, a viscosity model using the first set of viscosity measurements from the plurality of viscosity measurements for the fluid sample, wherein a static condition of the fluid sample is considered for training; determining, via the one or more hardware processors, an error correction factor for the second set of viscosity measurements under a flowing condition of the fluid sample; and predicting, via the one or more hardware processors, a real time value for the second set of viscosity measurements from the plurality of viscosity measurements for the fluid sample using trained viscosity model in accordance with the error correction factor.

In another aspect, a system is provided. The system comprising a memory storing instructions; one or more Input/Output (I/O) interfaces; and one or more hardware processors coupled to the memory via the one or more I/O interfaces, wherein the one or more hardware processors (104) are configured by the instructions to: generate a plurality of frequency domain photoacoustic (FDPA) signals based on excitation of a fluid sample using an intensity modulated continuous wave laser diode setup; extract a set of viscosity features from the plurality of frequency domain photoacoustic (FDPA) signals, wherein the set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals; obtain a plurality of viscosity measurements for the fluid sample using the set of viscosity features; split the plurality of viscosity measurements into a first set of viscosity measurements and a second set of viscosity measurements; train a viscosity model using the first set of viscosity measurements from the plurality of viscosity measurements for the fluid sample, wherein a static condition of the fluid sample is considered for training; determine an error correction factor for the second set of viscosity measurements under a flowing condition of the fluid sample; and predict a real time value for the second set of viscosity measurements from the plurality of viscosity measurements for the fluid sample using trained viscosity model in accordance with the error correction factor.

In yet another aspect, there are provided one or more non-transitory machine-readable information storage mediums comprising one or more instructions which when executed by one or more hardware processors cause: generating a plurality of frequency domain photoacoustic (FDPA) signals based on excitation of a fluid sample using an intensity modulated continuous wave laser diode setup; extracting a set of viscosity features from the plurality of frequency domain photoacoustic (FDPA) signals, wherein the set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals; obtaining a plurality of viscosity measurements for the fluid sample using the set of viscosity features; splitting the plurality of viscosity measurements into a first set of viscosity measurements and a second set of viscosity measurements; training a viscosity model using the first set of viscosity measurements from the plurality of viscosity measurements for the fluid sample, wherein a static condition of the fluid sample is considered for training; determining an error correction factor for the second set of viscosity measurements under a flowing condition of the fluid sample; and predicting a real time value for the second set of viscosity measurements from the plurality of viscosity measurements for the fluid sample using trained viscosity model in accordance with the error correction factor.

In accordance with an embodiment of the present disclosure, the static condition and the flowing condition of the fluid sample are considered for the prediction.

In accordance with an embodiment of the present disclosure, the harmonic mean feature of the plurality of frequency domain photoacoustic (FDPA) signals from the set of viscosity features enables accurate prediction of real time value of the plurality of viscosity measurements.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for real-time measurement of fluid viscosity in flowing conditions using photoacoustic sensing, in accordance with some embodiments of the present disclosure.
FIG. 2 illustrates an exemplary flow diagram illustrating a method for real-time measurement of fluid viscosity in flowing conditions using photoacoustic (PA) sensing, using the system of FIG. 1, in accordance with some embodiments of the present disclosure.
FIG. 3 illustrates an intensity modulated continuous wave laser diode setup implemented for real-time measurement of fluid viscosity in flowing conditions using photoacoustic sensing, using the system of FIG. 1, in accordance with some embodiments of the present disclosure.
FIG. 4 illustrates a graphical representation of magnitude spectra of the frequency domain photoacoustic (FDPA) signal of an example fluid sampled at a certain frequency using the system of FIG. 3, in accordance with some embodiments of the present disclosure.
FIG. 5 illustrates a graphical representation of a time domain photoacoustic signal (TDPA) corresponding to the FDPA signal as shown in FIG. 4 of the example fluids sampled at a certain frequency using the system of FIG. 3, in accordance with some embodiments of the present disclosure.
FIGS. 6A and 6B illustrate graphical representation of frequency domain PA signals and time domain PA signals respectively for three paint samples having distinct viscosity, in accordance with some embodiments of the present disclosure.
FIGS. 7A through 7C illustrate graphical representations showing variation of the spectral amplitude ratio feature, the acoustic attenuation feature, and the velocity feature of the plurality of frequency domain photoacoustic (FDPA) signals feature respectively with the viscosity, in accordance with some embodiments of the present disclosure
FIG. 8 illustrates a graphical representation of the harmonic mean feature with the viscosity measurement for different samples, in accordance with an embodiment the present disclosure.
FIG. 9 illustrates a graphical representation depicting the time domain PA signal for two distinct viscosity samples in static and flow conditions, in accordance with an embodiment the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

This present disclosure provides a compact, non-invasive and cost-effective method to measure viscosity using frequency domain Photoacoustic (PA) sensing. Three different frequency and time domain features which are function of viscosity are extracted from frequency domain Photoacoustic (FDPA) signal. A feature is derived from a set of existing viscosity features to enhance accuracy of measurement. A viscosity model is trained from the FDPA signals when a fluid sample such as paint is under static condition. However, the same training model is used to measure the viscosity of the fluid sample in flowing conditions by adding an error correction factor. The accuracy of the viscosity measurement of the fluid sample under flowing conditions is found to be greater than 95%.

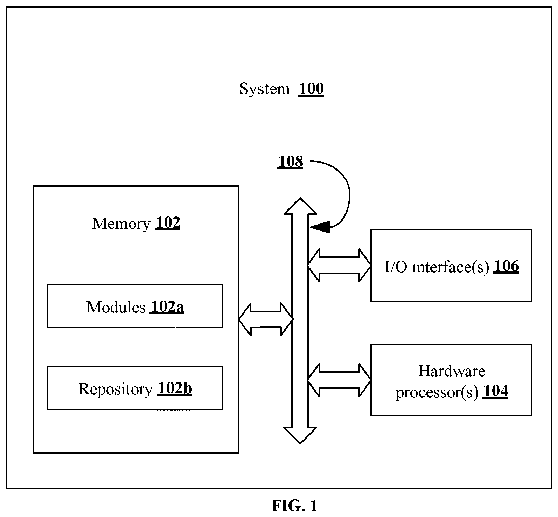

Referring now to the drawings, and more particularly to FIGS. 1 through 9, where similar reference characters denote corresponding features consistently throughout the figures, there are shown preferred embodiments and these embodiments are described in the context of the following exemplary system and/or method.

FIG. 1 illustrates an exemplary block diagram of a system for real-time measurement of fluid viscosity in flowing conditions using photoacoustic sensing, in accordance with some embodiments of the present disclosure.

In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

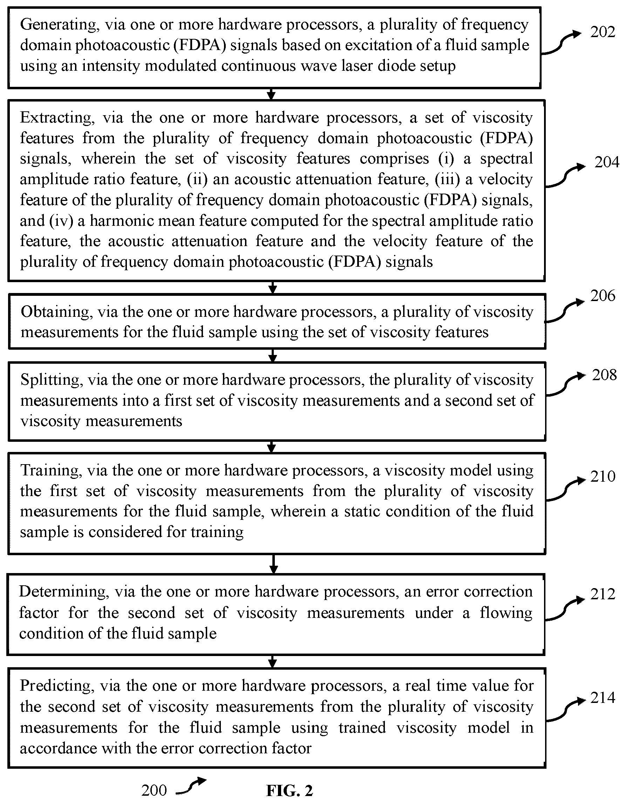

FIG. 2 illustrates an exemplary flow diagram illustrating a method for real-time measurement of fluid viscosity in flowing conditions using photoacoustic sensing, using the system of FIG. 1, in accordance with some embodiments of the present disclosure.

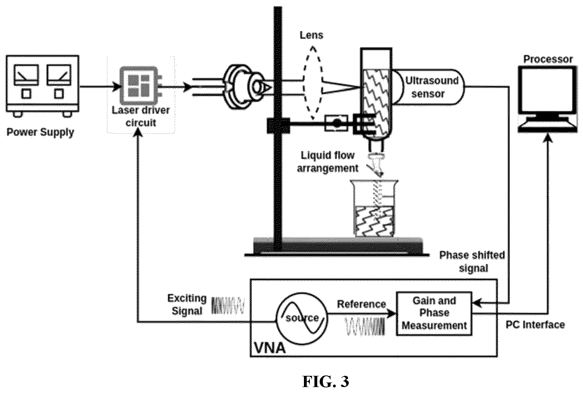

Referring to FIG. 2, in an embodiment, the system 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, the intensity modulated continuous wave laser diode setup of FIG. 3, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, the one or more hardware processors 104 are configured to generate a plurality of frequency domain photoacoustic (FDPA) signals based on excitation of a fluid sample using an intensity modulated continuous wave laser diode setup. In the present disclosure, capability of a non-invasive, cost efficient, frequency domain photoacoustic sensing technique for real time viscosity measurement of a paint in the flowing condition is demonstrated. The photoacoustic (PA) is a pump probe technique comprising of optical excitation to the fluid sample and acoustic acquisition. Here, the fluid sample ( i.e., sample under test) is excited either with a nano second laser pulses or an intensity modulated continuous wave laser. The fluid sample upon absorption of the laser radiation undergoes localized heating followed by thermoelastic expansion and contraction thereby releasing an acoustic signal (alternatively referred as acoustic wave) which is also called the photoacoustic (PA) signal. In PA, conventionally, bulky and costly pulsed laser sources are used. Due to their obvious complications these laser sources are not recommended to be installed in harsh environments such as paint manufacturing plants. In contrast, the continuous wave (CW) laser diodes are compact and cost effective, but they generate the PA signal with a very low signal to noise ratio (SNR) due to their low inherent power. Thus, these PA signals do not effectively propagate through highly attenuating medium like paint. Therefore, the method of the present disclosure adapts principle of sweep frequency acoustic interferometry (SFAI) to produce high SNR PA signals using a compact CW laser diode based PA system. These high SNR PA waves are termed as frequency domain PA (FDPA) signals throughout the description.

FIG. 3 illustrates an intensity modulated continuous wave (CW) laser diode setup implemented for real-time measurement of fluid viscosity in flowing conditions using photoacoustic sensing, using the system of FIG. 1, in accordance with some embodiments of the present disclosure. As shown in FIG. 3, the fluid sample in a glass container is irradiated with the intensity modulated CW laser diode of wavelength, 450nm and maximum power, 1.6W. The intensity of a CW laser is modulated with the linear frequency sweep from 0.1 MHz to 1 MHz through a custom built laser driver circuit. The modulated laser power at the sample's plane is kept at 0.4W/cm2 (peak to peak). Acoustic vibrations generated and propagated in the fluid sample are sensed by an ultrasound (US) sensor kept in contact with the glass container through a coupling gel. The plurality of FDPA signals from the US sensor is acquired and processed in a Vector Network Analyzer. As shown in FIG. 3, position of the source and sensor, optical power and temperature are kept constant.

Mathematically, a basic time domain equation for photoacoustic pressure signal is given as equation (1) below: $\left({∇}^{2}-\frac{1}{{c}_{s}^{2}}\frac{{\partial }^{2}}{\partial {t}^{2}}\right) P = \frac{- β}{{C}_{p}} \frac{δH}{δt}$ Here, *P* is the PA pressure signal, *cₛ* and *Cₚ* are speed of sound and specific heat at constant pressure in the medium respectively, *β* is a thermal expansion coefficient and *H* is a laser-enabled heating function. In FDPA, the intensity of the impinging CW laser is sinusoidally modulated with a linear sweep frequency *f.* The heating function, *H* is thus modulated at same frequency as *f* and is given as equation (2) below: $H = {μ}_{a} {I}_{0} {e}^{- iωt}$ In equation (2), *ω* = 2*πf*, µ*ₐ* is optical absorption coefficient of the fluid sample and *Iₒ* is intensity of the laser modulation. This sinusoidally modulating *H* leads to sinusoidally varying FDPA pressure signal *Pₒ*, whose frequency of modulation is exactly same as *f.* Here *Pₒ* is an initial pressure generated at sample's plane. Further, considering fluid sample as optically thin absorber, the FDPA signal *s*(*t*), propagating through the medium can be expressed as a second order differential shown as equation (3) below: $\frac{{δ}^{2}}{{δt}^{2}} s \left(t\right) + {k}_{o}^{2} \frac{ξ + \frac{4}{3} η}{{ρ}_{o}} \frac{δ}{δt} s \left(t\right) + {k}_{o}^{2} {c}_{s}^{2} = {P}_{o} cos \left(ωt-\frac{2 Π d}{λ}\right)$ Here, *ξ* and *η* represent bulk and shear viscosity of the medium respectively, *d* is distance between PA source and sensor, *kₒ = 2π*/*l* and l is thickness of the absorber. Equation (3) can be modelled as a harmonic oscillator to obtain a center frequency *ω_{c}* as shown in (4) below: ${ω}_{c} = \sqrt{{k}_{o}^{2} {c}_{s}^{2} - \frac{1}{2} {\left({k}_{o}^{2}\frac{ξ + \frac{4}{3} η}{{ρ}_{o}}\right)}^{2}}$ Equation (4) indicates that an increase in viscosity results in reduction of center frequency. This is mainly attributed to attenuation of high frequency component for higher viscosity samples. To obtain the plurality of FDPA signals, a bounded medium with opposite facing walls of the sample container is considered in which the swept frequency PA signal traverses back and forth. A resonance condition is established and standing waves are formed, whenever, integral multiple of half the wavelength *λ* becomes equal to the length of the container *L* as shown in equation (5) below: $L = n . λ / 2$ Here, *n* is the integer.

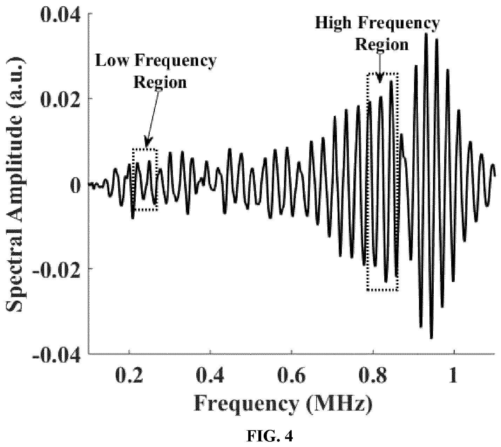

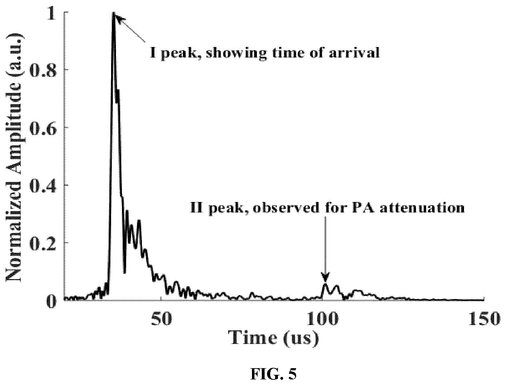

In an embodiment, a corresponding time domain PA (TDPA) for each of the generated plurality of FDPA signal is obtained by taking an Inverse Fourier Transform (IFT) of each of the generated plurality of FDPA signal. FIG. 4 illustrates a graphical representation of magnitude spectra of the frequency domain photoacoustic (FDPA) signal of an example fluid sampled at a certain frequency using the system of FIG. 3, in accordance with some embodiments of the present disclosure. In FIG. 4, a high frequency region and a low frequency region are shown. FIG. 5 illustrates a graphical representation of a time domain photoacoustic signal (TDPA) corresponding to the FDPA signal as shown in FIG. 4 of the example fluids sampled at a certain frequency using the system of FIG. 3, in accordance with some embodiments of the present disclosure. FIG. 5 shows a first peak representing time of arrival and a second peak observed for PA attenuation.

Further, at step 204 of the present disclosure, the one or more hardware processors 104 are configured to extract a set of viscosity features from the plurality of frequency domain photoacoustic (FDPA) signals. The set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals. Furthermore, at step 206 of the present disclosure, the one or more hardware processors 104 are configured to obtain a plurality of viscosity measurements for the fluid sample using the set of viscosity features. The plurality of viscosity measurements are initial viscosity measurements. The plurality of FDPA signals are retrieved into a computer for further signal processing and feature extraction to determine the viscosity measurement of the fluid sample. From the time and frequency domain PA signals, the set of viscosity feature are extracted to measure viscosity of the sample with high accuracy which are following:
i. Spectral amplitude ratio feature (*F*₁) - This is a ratio of peak to peak amplitude in higher frequency range to peak to peak amplitude in lower frequency range. The higher frequency and lower frequency range are shown in FIG. 4, wherein the peak to peak amplitude is also indicated.
ii. Acoustic Attenuation feature (*F*₂)- It is a ratio of a first peak amplitude to a second peak amplitude in the time domain PA signal as shown in FIG. 5.
iii. Velocity of the frequency domain photoacoustic signal (*F*₃) - It is a ratio of length of the container to time delay of the first peak of the time domain PA signal.
iv. Harmonic mean feature (*F*₄) - This is the harmonic mean of *F*₁, *F*₂ and *F*₃.
In other words, to obtain the viscosity of the fluid sample from the plurality of FDPA signals, the set of viscosity features that include different frequency domain and time domain features namely spectral amplitude ratio, acoustic attenuation and velocity are extracted. The accuracy of these features to measure viscosity is found to be less than 90% which is not sufficient. Thus, a new feature is derived which is the harmonic mean of the aforementioned features. This harmonic mean feature has outperformed in terms of accuracy (> 95%) when compared with previous features.

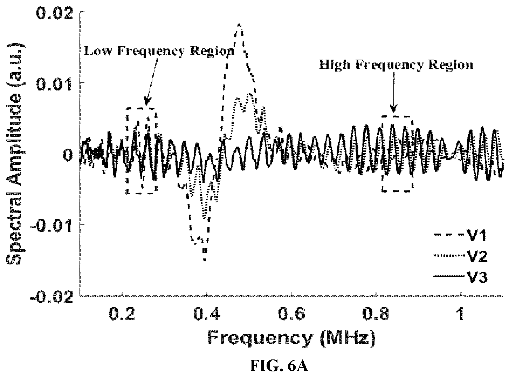

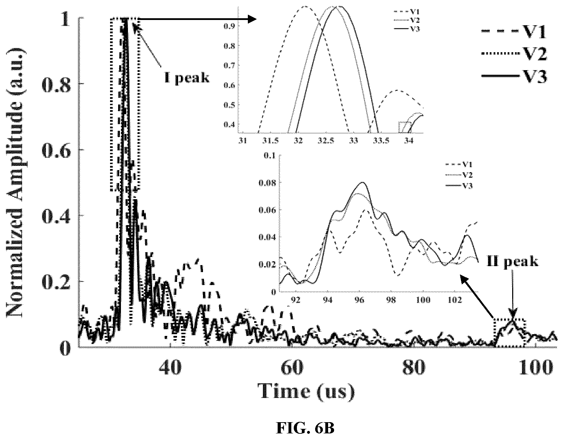

FIGS. 6A and 6B illustrate graphical representation of frequency domain PA signals and time domain PA signals respectively for three paint samples having distinct viscosity, in accordance with some embodiments of the present disclosure. From FIG. 6A, it is observed that as the viscosity of the paint increases, the peak to peak amplitude in the lower frequency range increases while for the higher frequencies the peak to peak amplitude decreases. This observation is in close agreement with equation (4), where mathematically it is shown that with the increase in viscosity, the center frequency decreases due to the attenuation of higher frequency components. Since the change in the amplitude of higher frequencies with the viscosity is not very significant, the spectral amplitude ratio feature (*F*₁) is considered for depicting this change. Similarly, FIG. 6B shows that with increase in viscosity, amplitude of the second peak reduces. Since, the time domain PA signal is normalized with the amplitude (i.e., maximum amplitude corresponding to peak 1), the lesser amplitude of the second peak signifies more attenuation. This is attributed to the fact that more viscous medium exhibit higher acoustic absorption which results in a higher attenuation of a PA signal. In such a way, acoustic attenuation feature (*F*₂) accounts for the change in viscosity and is extracted from FIG. 6B. Lastly, velocity of the FDPA signal feature (*F*₃) is observed from shift in the first peak of the time domain PA signal of FIG. 6B. For paints, the kinematic viscosity is proportional to the velocity of the FDPA signal. With the increase in viscosity, a reduction in the time of arrival of the first time domain peak is shown in FIG.6B, which manifests to increase in velocity of the FDPA signal.

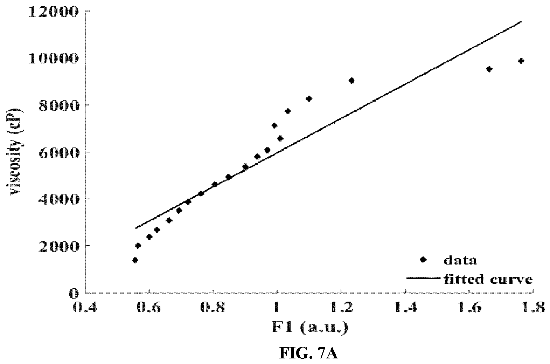

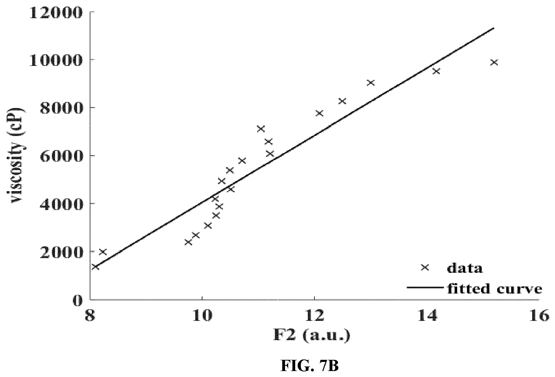

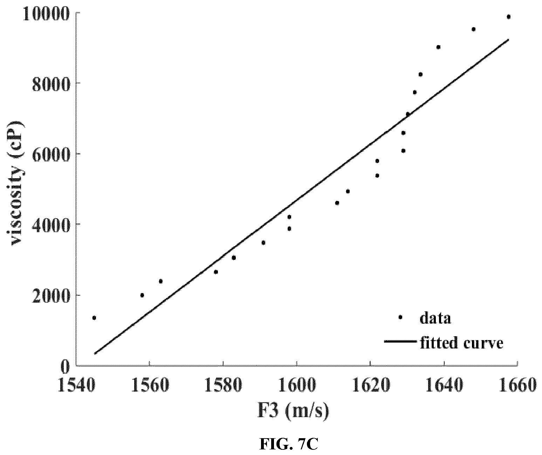

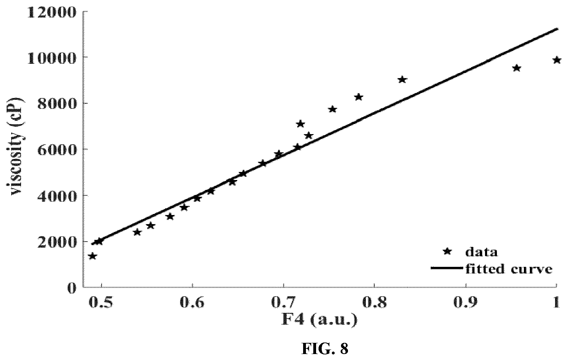

FIGS. 7A through 7C illustrate graphical representations showing variation of the spectral amplitude ratio feature, the acoustic attenuation feature, and the velocity feature of the plurality of frequency domain photoacoustic (FDPA) signals feature respectively with the viscosity, in accordance with some embodiments of the present disclosure. These features are linearly fitted to obtain a regression equation. The accuracy (i.e., goodness of fit) of these equations is measured by its *R*² value and for the three features it is found to be 89%, 88.66% and 89.8% respectively. Nevertheless, the accuracy of the aforementioned features is less to be accepted in the paint manufacturing process. Consequently, the new harmonic mean feature *F*₄ is derived from the existing features. Since *F*₁, *F*₂ are the ratios and *F*₃ is the velocity (i.e. the rate of change of displacement), the harmonic mean of *F*₁, *F*₂ and *F*₃ is derived as *F*₄ to achieve greater accuracy. The accuracy of the for linearly fitted *F*₄ with respect to the viscosity is found to be 96.5%. FIG. 8 illustrates a graphical representation of the harmonic mean feature with the viscosity measurement for different samples, in accordance with an embodiment the present disclosure. The regression equation is given as shown in equation (6) below: $V = \left|\left(a∗p\right)-b\right|$ In equation (6), *V* is the viscosity in *cP, p* is the feature *F*₄ in astronomical unit (a.u.) and *a* and *b* are slope of the regression curve and intercept respectively.

In an embodiment, at step 208 of the present disclosure, the one or more hardware processors 104 are configured to split the plurality of viscosity measurements into a first set of viscosity measurements and a second set of viscosity measurements. The first set of viscosity measurements is referred as a training set and the second set of viscosity measurements is referred as a testing set. Further, at step 210 of the present disclosure, the one or more hardware processors 104 are configured to train a viscosity model using the first set of viscosity measurements from the plurality of viscosity measurements for the fluid sample. The viscosity model could be a regression model, a machine learning model, and/or the like. In an embodiment, a static condition of the fluid sample is considered for training. The viscosity model is trained with the 80% of the total samples for viscosity measurement depicting the training set and tested with remaining 20% of the samples depicted the testing set. Due to experimental limitations, the training of the viscosity model is performed under the static condition of the fluid sample. In FIGS. 6A and 6B, distinct features for three different viscosity samples are highlighted. however, the viscosity model is trained on 20 different viscosity samples.

In an embodiment, at step 212 of the present disclosure, the one or more hardware processors 104 are configured to determine an error correction factor for the second set of viscosity measurements under a flowing condition of the fluid sample. The error in the viscosity measurement under the paint static condition is found to be less than 4 % while for the flow condition error is greater than 7%. Thus, the correction factor is used in the analysis for a paint flow condition. This correction factor has reduced the error in the measurement to be less than 5%. The results are compared with the ground truth (i.e., the viscosity measurements taken with a standard viscometer).

Further, at step 214 of the present disclosure, the one or more hardware processors 104 are configured to predict? a real time value for the second set of viscosity measurements from the plurality of viscosity measurements for the fluid sample using the trained viscosity model in accordance with the error correction factor. In an embodiment, the static condition and the flowing condition of the fluid sample are considered for prediction. In an embodiment, the harmonic mean feature of the plurality of frequency domain photoacoustic (FDPA) signals from the set of viscosity features enables accurate prediction of real time value of the plurality of viscosity measurements.

The steps 212 and 214 are further illustrated and better understood by way of following exemplary explanation.

For experiments, a water based paint is used. 25 samples with distinct viscosities were prepared by adding desired water to the paint and stirring it for 5-10 minutes. Immediately after the sample was prepared, the PA data and ground truth were measured. Ground truth was measured with the rotational type of viscometer such as LABMAN and LMDV-200. Since PA based measurement is an indirect mode of viscosity measurement, firstly calibration was performed. For calibration, the aforementioned features from FDPA signals have been plotted against the ground truth and a linear regression equation depicting the viscosity training model was prepared. 20 samples of 25 were considered for training the model and the remaining five are used for testing. For testing the trained viscosity model, PA data was collected with the remaining 5 samples both in the static and flowing conditions. From these five PA data sets, *F*₄ has been extracted and used with equation (6) to find viscosity (*V*). Table 1 provides results depicting error in viscosity measurement under static and flow conditions.

**Table 1**

| S. No | Viscosity (cP) | PA Viscosity (static) | PA Viscosity (flow) | Error in static condition | Error in flow condition |
|---|---|---|---|---|---|
| 1 | 9782 | 9511 | 9048 | 2.7% | 7.5% |
| 2 | 7284 | 7518 | 7784 | 3.2% | 6.8% |
| 3 | 6197 | 5965 | 5692 | 3.7% | 8.1% |
| 4 | 5257 | 5473 | 5622 | 4.1% | 6.9% |
| 5 | 3862 | 3981 | 3587 | 3% | 7.2% |

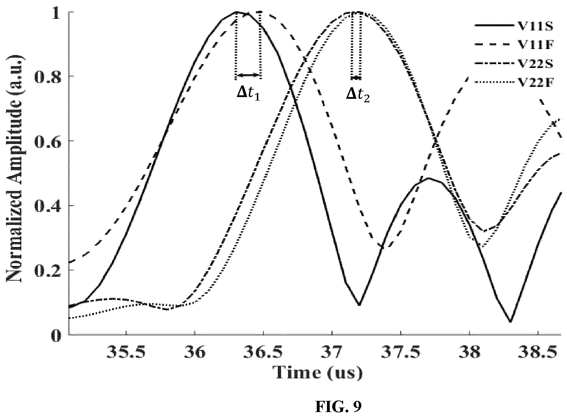

As shown in Table 1, for the static conditions, the error in the viscosity measurement is less than 4% but for the paint flow condition the error is greater than 7%. The error in the measurement is calculated using the equation (7) below: $Error \left(%\right) = \left|\frac{\left(Measured value-True value\right)}{True value}\right| \times 100$ FIG. 9 illustrates a graphical representation depicting the time domain PA signal for two distinct viscosity samples in static and flow conditions, in accordance with an embodiment the present disclosure. The greater error in the flow condition is due to doppler effect which can be observed in FIG. 9. Here, sample ${V}_{1}^{′}$ is more viscous than ${V}_{2}^{′}$. Therefore, the shift in the peak time of ${V}_{2}^{′}$ is greater than ${V}_{1}^{′}$. Since, a higher viscosity sample exhibit a lower flow rate, the shift in its PA velocity or peak time is less as compared to the lower viscosity sample. Thus, to measure the viscosity of the flowing paint it is essential to consider the doppler velocity effect. For viscosity measurement, the error correction factor is derived and applied to the velocity of the acoustic wave under static condition (*F*₃) based on the doppler shift. To determine the error correction factor, PA data from 5 distinct viscosity samples is collected under the static and flow conditions. Through this PA data, a relation between a doppler velocity (*Δv*) and velocity of the FDPA signal in the flow condition (*F*₃) is established. A relation between *Δv* and *F₃*' is shown in equation (8) below: $Δ v = a ′ . {F}_{3}^{′} + b ′$ Here, $Δ v = {F}_{3}^{′} - {F}_{3}$ and *a', b'* are the slope and intercept of (8) respectively. This correction factor (*Δv*) is used to get *F*₃ from the FDPA signal of the fluid sample under flowing condition. With this value of *F*₃ and the features *F*₁, *F*₂, further *F*₄ is calculated to measure the plurality of viscosity measurements of the fluid sample under flowing condition. To prove the efficacy of the error correction factor, a different water based paint is used and two samples with distinct viscosity are prepared and experimented under the flowing condition. With the application of the error correction factor, their viscosity is measured and compared with the ground truth. Table 2 provides results depicting error in viscosity measurement under static and flow conditions with the error correction factor.

**Table 2**

| S.No. | Viscosity (cP) | PA Viscosity (static) | PA Viscosity (flow) | Error in static condition | Error in flow condition |
|---|---|---|---|---|---|
| 1 | 7753 | 8044 | 8102 | 3.75% | 4.5% |
| 2 | 4266 | 4131 | 4063 | 3.1% | 4.7% |

As shown in Table 2, the error is found to be less than 5%. Thus, the results in Table 2 demonstrates the feasibility of the system of the present disclosure to be used in the paint manufacturing plants for inline viscosity measurements. Further, optical interferometry can be used to measure the acoustic vibrations and enable a complete non-contact and non-invasive PA based sensor for inline measurement of paint viscosity.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

In fluids such as paints, the viscosity changes with shear rate and other physical conditions and hence, it is essential to measure viscosity during the paint mixing or flowing conditions. Thus, the paint and coating industries demand some non-invasive, real time, cost efficient, field deployable and in-line viscosity measurement technique. Embodiment of the present disclosure provides a compact, non-invasive and cost effective, frequency domain photoacoustic sensing technique implemented by the systems and methods of the present disclosure for inline measurement of fluid viscosity. Through different frequency and time domain features, a harmonic mean feature is derived which can measure the viscosity with high accuracy. The application of the correction factor enables training of the viscosity model in the static conditions and measuring the viscosity in the flowing conditions in real time. A reported error of less than 5% in viscosity measurement may be further reduced by training the viscosity model with a greater number of datasets. The disclosed FDPA sensing system can be further engineered for its field deployment. Such non-invasive systems if implemented in a paint manufacturing industry, can largely reduce stoppage time of paint mixer and thereby increase productivity of the paint.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising:
generating (202), via one or more hardware processors, a plurality of frequency domain photoacoustic (FDPA) signals based on excitation of a fluid sample using an intensity modulated continuous wave laser diode setup;
extracting (204), via the one or more hardware processors, a set of viscosity features from the plurality of frequency domain photoacoustic (FDPA) signals, wherein the set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals;
obtaining (206), via the one or more hardware processors, a plurality of viscosity measurements for the fluid sample using the set of viscosity features;
splitting (208), via the one or more hardware processors, the plurality of viscosity measurements into a first set of viscosity measurements and a second set of viscosity measurements;
training (210), via the one or more hardware processors, a viscosity model using the first set of viscosity measurements from the plurality of viscosity measurements for the fluid sample, wherein a static condition of the fluid sample is considered for training;
determining (212), via the one or more hardware processors, an error correction factor for the second set of viscosity measurements under a flowing condition of the fluid sample; and
predicting (214), via the one or more hardware processors, a real time value for the second set of viscosity measurements from the plurality of viscosity measurements for the fluid sample using trained viscosity model in accordance with the error correction factor.

2. The processor implemented method (200) as claimed in claim 1, wherein the static condition and the flowing condition of the fluid sample are considered for the prediction.

3. The processor implemented method (200) as claimed in claim 1, wherein the harmonic mean feature of the plurality of frequency domain photoacoustic (FDPA) signals from the set of viscosity features enables accurate prediction of real time value of the plurality of viscosity measurements.

4. A system (100) comprising
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
generate a plurality of frequency domain photoacoustic (FDPA) signals based on excitation of a fluid sample using an intensity modulated continuous wave laser diode setup;
extract a set of viscosity features from the plurality of frequency domain photoacoustic (FDPA) signals, wherein the set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals;
obtain a plurality of viscosity measurements for the fluid sample using the set of viscosity features;
split the plurality of viscosity measurements into a first set of viscosity measurements and a second set of viscosity measurements;
train a viscosity model using the first set of viscosity measurements from the plurality of viscosity measurements for the fluid sample, wherein a static condition of the fluid sample is considered for training;
determine an error correction factor for the second set of viscosity measurements under a flowing condition of the fluid sample; and
predict a real time value for the second set of viscosity measurements from the plurality of viscosity measurements for the fluid sample using trained viscosity model in accordance with the error correction factor.

5. The system (100) as claimed in claim 4, wherein the static condition and the flowing condition of the fluid sample are considered for the prediction.

6. The system (100) as claimed in claim 4, wherein the harmonic mean feature of the plurality of frequency domain photoacoustic (FDPA) signals from the set of viscosity features enables accurate prediction of real time value of the plurality of viscosity measurements.

7. One or more non-transitory machine-readable information storage mediums comprising one or more instructions which when executed by one or more hardware processors cause:
generating a plurality of frequency domain photoacoustic (FDPA) signals based on excitation of a fluid sample using an intensity modulated continuous wave laser diode setup;
extracting a set of viscosity features from the plurality of frequency domain photoacoustic (FDPA) signals, wherein the set of viscosity features comprises (i) a spectral amplitude ratio feature, (ii) an acoustic attenuation feature, (iii) a velocity feature of the plurality of frequency domain photoacoustic (FDPA) signals, and (iv) a harmonic mean feature computed from the spectral amplitude ratio feature, the acoustic attenuation feature and the velocity feature of the plurality of frequency domain photoacoustic (FDPA) signals;
obtaining a plurality of viscosity measurements for the fluid sample using the set of viscosity features;
splitting the plurality of viscosity measurements into a first set of viscosity measurements and a second set of viscosity measurements;
training a viscosity model using the first set of viscosity measurements from the plurality of viscosity measurements for the fluid sample, wherein a static condition of the fluid sample is considered for training;
determining an error correction factor for the second set of viscosity measurements under a flowing condition of the fluid sample; and
predicting a real time value for the second set of viscosity measurements from the plurality of viscosity measurements for the fluid sample using trained viscosity model in accordance with the error correction factor.

8. The one or more non-transitory machine readable information storage mediums as claimed in claim 7, wherein the static condition and the flowing condition of the fluid sample are considered for the prediction.

9. The one or more non-transitory machine readable information storage mediums as claimed in claim 7, wherein the harmonic mean feature of the plurality of frequency domain photoacoustic (FDPA) signals from the set of viscosity features enables accurate prediction of real time value of the plurality of viscosity measurements.

## Patentansprüche

1. Prozessorimplementiertes Verfahren (200), umfassend:
Erzeugen (202), über einen oder mehrere Hardwareprozessoren, einer Mehrzahl von photoakustischen Frequenzbereichssignalen (FDPA-Signalen) basierend auf einer Anregung einer Fluidprobe unter Verwendung eines intensitätsmodulierten Dauerstrich-Laserdiodenaufbaus;
Extrahieren (204), über den einen oder die mehreren Hardwareprozessoren, eines Satzes von Viskositätsmerkmalen aus der Mehrzahl von photoakustischen Frequenzbereichssignalen (FDPA-Signalen), wobei der Satz von Viskositätsmerkmalen (i) ein spektrales Amplitudenverhältnismerkmal, (ii) ein akustisches Dämpfungsmerkmal, (iii) ein Geschwindigkeitsmerkmal der Mehrzahl von photoakustischen Frequenzbereichssignalen (FDPA-Signalen) und (iv) ein harmonisches Mittelwertmerkmal, das aus dem spektralen Amplitudenverhältnismerkmal, dem akustischen Dämpfungsmerkmal und dem Geschwindigkeitsmerkmal der Mehrzahl von photoakustischen Frequenzbereichssignalen (FDPA-Signalen) berechnet wird, umfasst;
Erhalten (206), über den einen oder die mehreren Hardwareprozessoren, einer Mehrzahl von Viskositätsmessungen für die Fluidprobe unter Verwendung des Satzes von Viskositätsmerkmalen;
Aufteilen (208), über den einen oder die mehreren Hardwareprozessoren, der Mehrzahl von Viskositätsmessungen in einen ersten Satz von Viskositätsmessungen und einen zweiten Satz von Viskositätsmessungen;
Trainieren (210), über den einen oder die mehreren Hardwareprozessoren, eines Viskositätsmodells unter Verwendung des ersten Satzes von Viskositätsmessungen aus der Mehrzahl von Viskositätsmessungen für die Fluidprobe, wobei ein statischer Zustand der Fluidprobe zum Trainieren berücksichtigt wird;
Bestimmen (212), über den einen oder die mehreren Hardwareprozessoren, eines Fehlerkorrekturfaktors für den zweiten Satz von Viskositätsmessungen unter einem Strömungszustand der Fluidprobe; und
Vorhersagen (214), über den einen oder die mehreren Hardwareprozessoren, eines Echtzeitwerts für den zweiten Satz von Viskositätsmessungen aus der Mehrzahl von Viskositätsmessungen für die Fluidprobe unter Verwendung des trainierten Viskositätsmodells gemäß dem Fehlerkorrekturfaktor.

2. Prozessorimplementiertes Verfahren (200) nach Anspruch 1, wobei der statische Zustand und der Strömungszustand der Fluidprobe für die Vorhersage berücksichtigt werden.

3. Prozessorimplementiertes Verfahren (200) nach Anspruch 1, wobei das harmonische Mittelwertmerkmal der Mehrzahl von photoakustischen Frequenzbereichssignalen (FDPA-Signalen) aus dem Satz von Viskositätsmerkmalen eine genaue Vorhersage eines Echtzeitwerts der Mehrzahl von Viskositätsmessungen ermöglicht.

4. System (100), umfassend
einen Speicher (102), der Anweisungen speichert;
eine oder mehrere Eingabe/Ausgabe-Schnittstellen (E/A-Schnittstellen) (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:
Erzeugen einer Mehrzahl von photoakustischen Frequenzbereichssignalen (FDPA-Signalen) basierend auf einer Anregung einer Fluidprobe unter Verwendung eines intensitätsmodulierten Dauerstrich-Laserdiodenaufbaus;
Extrahieren eines Satzes von Viskositätsmerkmalen aus der Mehrzahl von photoakustischen Frequenzbereichssignalen (FDPA-Signalen), wobei der Satz von Viskositätsmerkmalen (i) ein spektrales Amplitudenverhältnismerkmal, (ii) ein akustisches Dämpfungsmerkmal, (iii) ein Geschwindigkeitsmerkmal der Mehrzahl von photoakustischen Frequenzbereichssignalen (FDPA-Signalen) und (iv) ein harmonisches Mittelwertmerkmal, das aus dem spektralen Amplitudenverhältnismerkmal, dem akustischen Dämpfungsmerkmal und dem Geschwindigkeitsmerkmal der Mehrzahl von photoakustischen Frequenzbereichssignalen (FDPA-Signalen) berechnet wird, umfasst;
Erhalten einer Mehrzahl von Viskositätsmessungen für die Fluidprobe unter Verwendung des Satzes von Viskositätsmerkmalen;
Aufteilen der Mehrzahl von Viskositätsmessungen in einen ersten Satz von Viskositätsmessungen und einen zweiten Satz von Viskositätsmessungen;
Trainieren eines Viskositätsmodells unter Verwendung des ersten Satzes von Viskositätsmessungen aus der Mehrzahl von Viskositätsmessungen für die Fluidprobe, wobei ein statischer Zustand der Fluidprobe zum Trainieren berücksichtigt wird;
Bestimmen eines Fehlerkorrekturfaktors für den zweiten Satz von Viskositätsmessungen unter einem Strömungszustand der Fluidprobe; und
Vorhersagen eines Echtzeitwerts für den zweiten Satz von Viskositätsmessungen aus der Mehrzahl von Viskositätsmessungen für die Fluidprobe unter Verwendung des trainierten Viskositätsmodells gemäß dem Fehlerkorrekturfaktor.

5. System (100) nach Anspruch 4, wobei der statische Zustand und der Strömungszustand der Fluidprobe für die Vorhersage berücksichtigt werden.

6. System (100) nach Anspruch 4, wobei das harmonische Mittelwertmerkmal der Mehrzahl von photoakustischen Frequenzbereichssignalen (FDPA-Signalen) aus dem Satz von Viskositätsmerkmalen eine genaue Vorhersage eines Echtzeitwerts der Mehrzahl von Viskositätsmessungen ermöglicht.

7. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:
Erzeugen einer Mehrzahl von photoakustischen Frequenzbereichssignalen (FDPA-Signalen) basierend auf einer Anregung einer Fluidprobe unter Verwendung eines intensitätsmodulierten Dauerstrich-Laserdiodenaufbaus;
Extrahieren eines Satzes von Viskositätsmerkmalen aus der Mehrzahl von photoakustischen Frequenzbereichssignalen (FDPA-Signalen), wobei der Satz von Viskositätsmerkmalen (i) ein spektrales Amplitudenverhältnismerkmal, (ii) ein akustisches Dämpfungsmerkmal, (iii) ein Geschwindigkeitsmerkmal der Mehrzahl von photoakustischen Frequenzbereichssignalen (FDPA-Signalen) und (iv) ein harmonisches Mittelwertmerkmal, das aus dem spektralen Amplitudenverhältnismerkmal, dem akustischen Dämpfungsmerkmal und dem Geschwindigkeitsmerkmal der Mehrzahl von photoakustischen Frequenzbereichssignalen (FDPA-Signalen) berechnet wird, umfasst;
Erhalten einer Mehrzahl von Viskositätsmessungen für die Fluidprobe unter Verwendung des Satzes von Viskositätsmerkmalen;
Aufteilen der Mehrzahl von Viskositätsmessungen in einen ersten Satz von Viskositätsmessungen und einen zweiten Satz von Viskositätsmessungen;
Trainieren eines Viskositätsmodells unter Verwendung des ersten Satzes von Viskositätsmessungen aus der Mehrzahl von Viskositätsmessungen für die Fluidprobe, wobei ein statischer Zustand der Fluidprobe zum Trainieren berücksichtigt wird;
Bestimmen eines Fehlerkorrekturfaktors für den zweiten Satz von Viskositätsmessungen unter einem Strömungszustand der Fluidprobe; und
Vorhersagen eines Echtzeitwerts für den zweiten Satz von Viskositätsmessungen aus der Mehrzahl von Viskositätsmessungen für die Fluidprobe unter Verwendung des trainierten Viskositätsmodells gemäß dem Fehlerkorrekturfaktor.

8. Ein oder mehrere nichtflüchtige maschinenlesbare Informationsspeichermedien nach Anspruch 7, wobei der statische Zustand und der Strömungszustand der Fluidprobe für die Vorhersage berücksichtigt werden.

9. Ein oder mehrere nichtflüchtige maschinenlesbare Informationsspeichermedien nach Anspruch 7, wobei das harmonische Mittelwertmerkmal der Mehrzahl von photoakustischen Frequenzbereichssignalen (FDPA-Signalen) aus dem Satz von Viskositätsmerkmalen eine genaue Vorhersage eines Echtzeitwerts der Mehrzahl von Viskositätsmessungen ermöglicht.

## Revendications

1. Procédé mis en œuvre par processeur (200), comprenant :
la génération (202), via un ou plusieurs processeurs matériels, d'une pluralité de signaux photoacoustiques dans le domaine fréquentiel (FDPA) sur la base de l'excitation d'un échantillon de fluide en utilisant une configuration de diode laser à onde continue modulée en intensité ;
l'extraction (204), via les un ou plusieurs processeurs matériels, d'un ensemble de caractéristiques de viscosité à partir de la pluralité de signaux photoacoustiques dans le domaine fréquentiel (FDPA), dans lequel l'ensemble de caractéristiques de viscosité comprend (i) une caractéristique de rapport d'amplitude spectrale, (ii) une caractéristique d'atténuation acoustique, (iii) une caractéristique de vitesse de la pluralité de signaux photoacoustiques dans le domaine fréquentiel (FDPA), et (iv) une caractéristique de moyenne harmonique calculée à partir de la caractéristique de rapport d'amplitude spectrale, de la caractéristique d'atténuation acoustique et de la caractéristique de vitesse de la pluralité de signaux photoacoustiques dans le domaine fréquentiel (FDPA) ;
l'obtention (206), via les un ou plusieurs processeurs matériels, d'une pluralité de mesures de viscosité pour l'échantillon de fluide en utilisant l'ensemble de caractéristiques de viscosité ;
la division (208), via les un ou plusieurs processeurs matériels, de la pluralité de mesures de viscosité en un premier ensemble de mesures de viscosité et un second ensemble de mesures de viscosité ;
l'entraînement(210), via les un ou plusieurs processeurs matériels, d'un modèle de viscosité en utilisant le premier ensemble de mesures de viscosité à partir de la pluralité de mesures de viscosité pour l'échantillon de fluide, dans lequel une condition statique de l'échantillon de fluide est considérée pour l'entraînement;
la détermination (212), via les un ou plusieurs processeurs matériels, d'un facteur de correction d'erreur pour le second ensemble de mesures de viscosité dans une condition d'écoulement de l'échantillon de fluide ; et
la prédiction (214), via les un ou plusieurs processeurs matériels, d'une valeur en temps réel pour le second ensemble de mesures de viscosité à partir de la pluralité de mesures de viscosité pour l'échantillon de fluide en utilisant un modèle de viscosité entraîné conformément au facteur de correction d'erreur.

2. Procédé mis en œuvre par processeur (200) selon la revendication 1, dans lequel la condition statique et la condition d'écoulement de l'échantillon de fluide sont considérées pour la prédiction.

3. Procédé mis en œuvre par processeur (200) selon la revendication 1, dans lequel la caractéristique de moyenne harmonique de la pluralité de signaux photoacoustiques dans le domaine fréquentiel (FDPA) à partir de l'ensemble de caractéristiques de viscosité permet une prédiction précise de la valeur en temps réel de la pluralité de mesures de viscosité.

4. Système (100) comprenant:
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
générer une pluralité de signaux photoacoustiques dans le domaine fréquentiel (FDPA) sur la base de l'excitation d'un échantillon de fluide en utilisant une configuration de diode laser à onde continue modulée en intensité ;
extraire un ensemble de caractéristiques de viscosité à partir de la pluralité de signaux photoacoustiques dans le domaine fréquentiel (FDPA), dans lequel l'ensemble de caractéristiques de viscosité comprend (i) une caractéristique de rapport d'amplitude spectrale, (ii) une caractéristique d'atténuation acoustique, (iii) une caractéristique de vitesse de la pluralité de signaux photoacoustiques dans le domaine fréquentiel (FDPA), et (iv) une caractéristique de moyenne harmonique calculée à partir de la caractéristique de rapport d'amplitude spectrale, de la caractéristique d'atténuation acoustique et de la caractéristique de vitesse de la pluralité de signaux photoacoustiques dans le domaine fréquentiel (FDPA) ;
obtenir une pluralité de mesures de viscosité pour l'échantillon de fluide en utilisant l'ensemble de caractéristiques de viscosité ;
diviser la pluralité de mesures de viscosité en un premier ensemble de mesures de viscosité et un second ensemble de mesures de viscosité ;
entraîner un modèle de viscosité en utilisant le premier ensemble de mesures de viscosité à partir de la pluralité de mesures de viscosité pour l'échantillon de fluide, dans lequel une condition statique de l'échantillon de fluide est considérée pour l'entraînement;
déterminer un facteur de correction d'erreur pour le second ensemble de mesures de viscosité dans une condition d'écoulement de l'échantillon de fluide; et
prédire une valeur en temps réel pour le second ensemble de mesures de viscosité à partir de la pluralité de mesures de viscosité pour l'échantillon de fluide en utilisant un modèle de viscosité entraîné conformément au facteur de correction d'erreur.

5. Système (100) selon la revendication 4, dans lequel la condition statique et la condition d'écoulement de l'échantillon de fluide sont considérées pour la prédiction.

6. Système (100) selon la revendication 4, dans lequel la caractéristique de moyenne harmonique de la pluralité de signaux photoacoustiques dans le domaine fréquentiel (FDPA) à partir de l'ensemble de caractéristiques de viscosité permet une prédiction précise de la valeur en temps réel de la pluralité de mesures de viscosité.

7. Un ou plusieurs supports de stockage d'informations lisibles par machine non transitoires comprenant une ou plusieurs instructions qui, lorsqu'elles sont exécutées par un ou plusieurs processeurs matériels, amènent :
la génération d'une pluralité de signaux photoacoustiques dans le domaine fréquentiel (FDPA) sur la base de l'excitation d'un échantillon de fluide en utilisant une configuration de diode laser à onde continue modulée en intensité ;
l'extraction d'un ensemble de caractéristiques de viscosité à partir de la pluralité de signaux photoacoustiques dans le domaine fréquentiel (FDPA), dans lequel l'ensemble de caractéristiques de viscosité comprend (i) une caractéristique de rapport d'amplitude spectrale, (ii) une caractéristique d'atténuation acoustique, (iii) une caractéristique de vitesse de la pluralité de signaux photoacoustiques dans le domaine fréquentiel (FDPA), et (iv) une caractéristique de moyenne harmonique calculée à partir de la caractéristique de rapport d'amplitude spectrale, de la caractéristique d'atténuation acoustique et de la caractéristique de vitesse de la pluralité de signaux photoacoustiques dans le domaine fréquentiel (FDPA) ;
l'obtention d'une pluralité de mesures de viscosité pour l'échantillon de fluide en utilisant l'ensemble de caractéristiques de viscosité ;
la division de la pluralité de mesures de viscosité en un premier ensemble de mesures de viscosité et un second ensemble de mesures de viscosité ;
l'entraînementd'un modèle de viscosité en utilisant le premier ensemble de mesures de viscosité à partir de la pluralité de mesures de viscosité pour l'échantillon de fluide, dans lequel une condition statique de l'échantillon de fluide est considérée pour l'entraînement;
la détermination d'un facteur de correction d'erreur pour le second ensemble de mesures de viscosité dans une condition d'écoulement de l'échantillon de fluide ; et
la prédiction d'une valeur en temps réel pour le second ensemble de mesures de viscosité à partir de la pluralité de mesures de viscosité pour l'échantillon de fluide en utilisant un modèle de viscosité entraîné conformément au facteur de correction d'erreur.

8. Un ou plusieurs supports de stockage d'informations lisibles par machine non transitoires selon la revendication 7, dans lequel la condition statique et la condition d'écoulement de l'échantillon de fluide sont considérées pour la prédiction.

9. Un ou plusieurs supports de stockage d'informations lisibles par machine non transitoires selon la revendication 7, dans lequel la caractéristique de moyenne harmonique de la pluralité de signaux photoacoustiques dans le domaine fréquentiel (FDPA) à partir de l'ensemble de caractéristiques de viscosité permet une prédiction précise de la valeur en temps réel de la pluralité de mesures de viscosité.
